# EUROPÄISCHE PATENTANMELDUNG

(11) **EP 1 295 765 A2**
(43) Veröffentlichungstag der Anmeldung: **26.03.2003**
(21) Anmeldenummer: 02018420.6
(22) Anmeldetag: 16.08.2002
(51) Int. Cl.: B60R 22/48, A44B 11/26, B60R 21/01

(54) **Vorrichtung zur Gurtkraft- und Gurtbenutzungserkennung**

(30) Priorität: 21.09.2001 DE 10146630
(71) Anmelder: ROBERT BOSCH GMBH, 70442 Stuttgart (DE)
(72) Erfinder: Mattes, Bernhard, 74343 Sachsenheim (DE); Zabler, Erich, 76297 Stutensee (DE); Dukart, Anton, 70839 Gerlingen (DE); Groeger, Ulrich, 70469 Stuttgart (DE)

(57) **Zusammenfassung**

Die Erfindung bezieht sich auf ein Gurtschloss (8) zur Aufnahme eines Befestigungselementes (2) eines Sicherheitsgurtes (1) mit einer Einführöffnung (10) für das Befestigungselement (2). Im Gurtschloss (8) ist ein eine Arretieröffnung (3) am Befestigungselement (2) durchsetzendes Verschlusselement (20) aufgenommen. Das Verschlusselement (20) ist an einem blattfederartigen Träger (17) angeordnet, über den eine Einfahrbewegung (24) des Verschlusses (20) in die Arretieröffnung (3) des Befestigungselementes (2) erfolgt, wenn dieses durch die Einführbewegung des Befestigungselementes (2) einen Sperrhebel (12) betätigt. Die Einfahrbewegung (24) des Verschlusselements (20) wird über einen, einen magnetfeldempflindlichen Sensor (31) enthaltenden Magnetkreis (16) überwacht. Einem das Befestigungselement (2) des Sicherheitsgurtes (1) fixierendes Bauteil (11, 20) des Gurtschlosses (8) ist ein Messelement (25) zugeordnet, mit welchem über den Magnetkreis (16, 31) ein eine auf das Gutschloss einwirkende Kraft erfasst werden kann.

## Beschreibung

### Technisches Gebiet

Insassenschutzsysteme, wie z. B. Sicherheitsgurte, werden heute standardmäßig in Kraftfahrzeugen eingesetzt. Die Schnappverschlüsse des Sicherheitsgurtes rasten im Gurtschloss ein und schützen die Insassen eines Kraftfahrzeuges oder eines anderen Fahrzeuges vor Verletzungen im Falle eines Unfalls. Den Gurtschlössern sind in der Regel Detektionselemente zugeordnet, die den Zustand und die Position der Anschnallzunge des Sicherheitsgurtes im Gurtschloss detektieren. Mittels der Detektionselemente werden die Zustände angeschnallt, nicht-angeschnallt erfasst, und danach den Insassen akustisch und/oder dem Fahrer auf optischem und/oder akustischen Wege übermittelt.

### Stand der Technik

Aus US 6,079,744 ist ein Gurtschloss mit einer Erfassungseinrichtung für die Anschnallzunge des Sicherheitsgurtes bekannt. Die Anschnallzunge ist an einem flexiblen Sicherheitsgurt aufgenommen. Mittels der Anschnallzunge wird der flexible Sicherheitsgurt im Gurtschloss verrastet. Innerhalb des Gurtschlosses ist ein Stift aus ferromagnetischem Material angeordnet, der zwischen einer unbetätigten und einer betätigten Position, in der die Anschnallzunge des Sicherheitsgurtes innerhalb des Gurtschlosses arretiert ist, bewegt werden kann. Am Gurtschloss ist ein Magnetfeldsensor aufgenommen. Mittels eines Magneten wird ein magnetisches Feld erzeugt, wobei der Magnet in einem Abstand zum Magnetfeldsensor am Gurtschloss aufgenommen ist. Der Magnet und der Magnetfeldsensor bilden zueinander eine Lücke, innerhalb der der Stift in einer nichtbetätigten Position, einer betätigten Position mit Anschnallzunge und einer betätigten Position ohne Anschnallzunge das vom Magnetfeldsensor detektierte Magnetfeld ändert.

### Darstellung der Erfindung

Mittels der erfindungsgemäß vorgeschlagenen Lösung kann einerseits der Zustand der Anschnallzunge im Gurtschloss, andererseits die auf den Sicherheitsgurt wirkende Kraft gemessen werden. Die Feststellung des Zustandes der Anschnallzunge, d. h. deren eingerasteter Zustand bzw. deren nicht-eingerasteter Zustand im Gurtschloss sowie die auf das Gurtschloss einwirkende Zugkraft kann mittels eines Sensors mit relativ wenig Aufwand gemessen werden. Dazu kann z. B. an einem Verschlusselement, welches die Öffnung eines Befestigungselementes (Anschnallzunge) des Sicherheitsgurtes durchstößt und diese somit im Gurtschloss befestigt oder auch an anderen durch die Zugkraft des Sicherheitsgurtes beanspruchten Komponenten des Gurtschlosses ein Messelement angebracht werden, welches z. B. aus einem ferromagnetischen Werkstoff gefertigt ist.

Der Einführöffnung des Gurtschlosses zugeordnet, befindet sich oberhalb oder unterhalb des Einführweges des Befestigungselementes des Sicherheitsgurtes ein Magnetkreis mit, einen magnetfeldempfindlichen Sensor umfassend. Der Magnetkreis wird bei Einführen des Befestigungselementes des Sicherheitsgurtes durch ein Hochfahren des Verschlusses geschlossen, so dass der magnetfeldempfindliche Sensor die Information "Befestigungselement des Sicherheitsgurtes ist im Gurtschloss korrekt eingerastet" erzeugt. Mittels beispielsweise eines dem Verschlusselement zugeordneten Messelementes kann eine Verschiebung des Verschlusses aufgrund einer Änderung der Zugkraft im Sicherheitsgurt detektiert werden. Durch eine Feldstärkemodulation des magnetfeldempfindlichen Sensors kann der der Zugkraft auf den Sicherheitsgurt proportionale Weg des Verschlusselementes leicht erfasst werden. Das Messelement, mit welchem ein der Zugkraft des Sicherheitsgurtes proportionales Kraftsignal detektiert werden kann, kann darüber hinaus auch an einem anderen Bauteil des Gurtschlosses, z. B. der oberen Abdeckzunge des Gurtschlosses, zugeordnet werden, durch welche das Verschlusselement des Gurtschlosses bei korrekt eingerastetem Befestigungselement des Sicherheitsgurtes hindurchragt, und welchem der Magnetkreis zugeordnet ist, der den magnetfeldempfindlichen Sensor umfasst.

Die Erfassung einer auf das Verschlusselement des Gurtschlosses einwirkenden Kraft kann zur Auslösung eines Gurtstraffers herangezogen werden, sobald ein bestimmter Wert für die am Sicherheitsgurt auftretende zulässige Zugkraft überschritten wird. Die erfasste Zugkraft kann weiterhin abhängig von der Höhe der ermittelten Kraft der zentralen Auslösevorrichtung für Insassenschutzsysteme (Airbags) weitergegeben werden. Dort kann die Information über die im Sicherheitsgurt aufgetretene Zugkraft gespeichert werden und im Falle eines Unfalls zur Rekonstruktion des Unfallherganges verwendet werden und zur Weiterentwicklung von Insassenschutzsystemen hinsichtlich der tatsächlich während eines Unfalles auftretenden Beanspruchungen dienen.

### Zeichnung

Anhand der Zeichnung wird die erfindungsgemäße Lösung nachstehend eingehender beschrieben.

Es zeigt:
- Figur 1: ein Befestigungselement eines Sicherheitsgurtes vor dem Einführen in eine Gurtschlossöffnung,
- Figur 2: ein in ein Gurtschloss eingeführtes Befestigungselement im eingerasteten Zustand und
- Fig. 3: eine perspektivische Draufsicht auf die Komponenten eines Magnetkreises samt eines Messelementes am Verschlusselement.

### Ausführungsvarianten

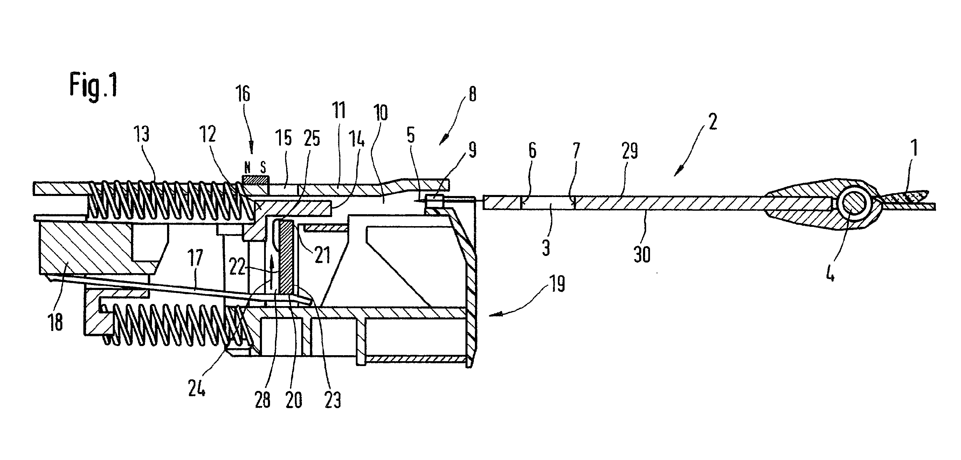

Figur 1 ist die Darstellung einer Gurtzunge eines Sicherheitsgurtes vor dem Einführen in die Einführöffnung eines Gurtschlosses zu entnehmen.

Ein Sicherheitsgurt 1, der integraler Bestandteil eines Insassenschutzsystems zur Erhöhung der passiven Sicherheit von Fahrzeugsinsassen darstellt, ist mittels eines Befestigungselementes 2, hier in Gestalt einer Gurtzunge dargestellt, in einem Gurtschloss 8 befestigbar. Die als Befestigungselement 2 fungierende Gurtzunge ist an einer Verbindungsstelle 4 mit dem Sicherheitsgurt verbunden, wobei die im Sicherheitsgurt 1 auftretenden Zugkräfte über die Verbindungsstelle 4 in die als Befestigungselement 2 fungierende Gurtzunge eingeleitet werden.

Das Befestigungselement 2 umfasst eine Arretieröffnung 3, die eine erste Seite 6 und eine dieser gegenüberliegende Arretierseite 7 umfasst, jeweils bezogen auf die Einführrichtung 5 des Befestigungselementes 2 in eine Einführöffnung 10 des Gurtschlosses 8. Die Oberseite des Befestigungselementes 2 ist mit Bezugszeichen 29 gekennzeichnet, wohingegen die Unterseite des als Gurtzunge ausgebildeten Befestigungselementes 3 mit dem Bezugszeichen 30 identifiziert ist. In Richtung des mit Bezugszeichen 5 identifizierten Pfeiles wird die als Befestigungselement 2 dienende Gurtzunge des Sicherheitsgurtes 1 in die Einführöffnung 10 des Gurtschlosses 8 eingeführt.

Zur Erleichterung der Einführbewegung des Befestigungselementes 2 in Einführrichtung 5 in die Einführöffnung 10 des Gurtschlosses 8 sind in der Einführöffnung 10 Führungsabschnitte 9 vorgesehen, welche die seitlichen Flächen des Befestigungselementes 2 erfassen und eine verkantungsfreie Einschiebbewegung des Befestigungselementes 2 in die Einrühröffnung 10 ermöglichen.

Die Einführöffhung 10 ist einerseits von der Unterseite einer Abdeckzunge 11 des Gurtschlosses 8 und andererseits vom Korpus 19 des Gurtschlosses 8 begrenzt. Am Ende der schlitzförmig konfigurierten Einführöffnung 10 ist ein Sperrhebel 12 aufgenommen, der seinerseits durch ein Federelement 13 vorgespannt ist. Die der Vorderseite des Befestigungselementes 2 zuweisende Seite, d.h. die Anlagefläche des Sperrhebels 12 ist mit Bezugszeichen 14 gekennzeichnet. Oberhalb des Sperrhebels 12 in seiner in Figur 1 dargestellten Position ist in der Abdeckzunge 11 des Gurtschlosses 8 eine Öffnung 15 ausgebildet. Der Öffnung 15 an der Oberseite der Abdeckzunge 11 ist ein Magnetkreis 16 zugeordnet, mit welchem eine Einfahrbewegung 24 eines Verschlusses 20, der beispielsweise in Form eines Schnappstiftes ausgestaltet sein kann, überwacht wird.

Der in Figur 1 unterhalb des Sperrhebels 12 in seiner deaktivierten Position liegende Verschluss 20 besteht vorzugsweise aus einem ferromagnetischen Material und ist auf einem blattfederförmigen Hebel 17 aufgenommen, der seinerseits in einem Aufnahmeelement 18 gehalten ist. Durch den blattfederartigen Hebel 17 wird dem Verschlusselement 20 eine Anstellkraft in Richtung auf die Öffnung 15 in der Abdeckzunge 11 des Gurtschlosses 8 aufgeprägt. Durch den hier in seiner Sperrstellung befindlichen Sperrhebel 12 wird das Verschlusselement 20 in einer in einen Hohlraum 28 des Gurtschlosses 8 zurückgestellten Position gehalten. Die Stirnseite des Verschlusselementes 20 aus ferromagnetischem Material ist durch Bezugszeichen 21 gekennzeichnet, eine erste Seite des Verschlusselementes 20 ist mit Bezugszeichen 22 beziffert, während die dem Befestigungselement 2 zuweisende Seite des ferromagnetischen Verschlusselementes durch Bezugszeichen 23 gekennzeichnet ist. Die Abdeckzunge 11, die Aufnahme 18 für den blattfederförmigen Hebel 17 des Verschlusses 20, das Federelement 13, welches den Sperrhebel 12 beaufschlagt sowie der Sperrhebel 12 selbst ist im Korpus 19 des Gurtschlosses 8 angeordnet.

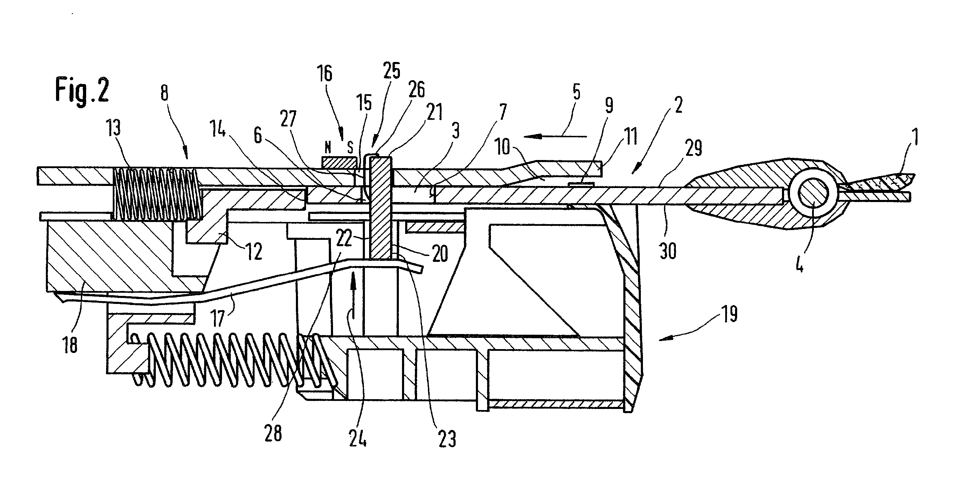

Figur 2 zeigt ein in ein Gurtschloss eingeführtes Befestigungselement eines Sicherheitsgurtes in seinem eingerasteten Zustand.

Der Figur 2 kann entnommen werden, dass das Befestigungselement 2 des Sicherheitsgurtes 1 in Gestalt einer Gurtzunge in die Einführöffnung 11 im oberen Bereich des Gurtschlosses 8 eingeschoben ist. Durch die Einführbewegung in Einführrichtung 5 des Befestigungselementes 2 liegt dessen dem Sperrhebel 12 zuweisende Stirnseite an der Anlagefläche 14 des Sperrhebels 12 an, und drückt diesen gegen die Kraft des Federelementes 13 im Korpus 19 des Gurtschlosses 8 zurück. Bei der Bewegung des Befestigungselementes 2 in Gestalt einer Gurtzunge in die Einführöffnung 10, überfährt die in dem Befestigungselement 2 vorgesehene Arretieröffnung 3 die Stirnseite 21 des aus ferromagnetischem Material gefertigten Verschlusses 20. Bedingt durch dessen Federvorspannung durch den blattförmig konfigurierten Träger 17 schnellt das Verschlusselement 20 durch die Arretieröffnung 3 in die Öffnung 15 in der Abdeckzunge 11 ein und liegt mit seinem oberen Bereich gegenüber den Komponenten des Magnetkreises 16 an der Oberseite der Abdeckzunge 11 des Gurtschlosses 8. Mittels der Komponenten des Magnetkreises 16 kann die Einfahrbewegung 24 des Verschlusses 20 zur Gänze überwacht werden. Der Darstellung gemäß Figur 2 ist zu entnehmen, dass in diese Ausführungsvariante der erfindungsgemäßen Lösung dem Verschluss 20 ein Messelement 25 zugeordnet ist, dessen stirnseitiger Bereich 26 die Stirnseite 21 des Verschlusses 20 überdeckt. Ein Seitenabschnitt 27 des verformbaren elastischen Messelementes 25 verläuft parallel zur ersten Seite 22 des Verschlusses 20 aus ferromagnetischem Material. Der Seitenabschnitt 27 des Messelementes 25 liegt im in Figur 2 dargestellten Zustand gerade an der ersten Seite 6 der Arretieröffnung des Befestigungselementes 2 des Sicherheitsgurtes 1 an, während die zweite Seite 23 des Verschlusses der dem Messelement 25 gegenüberliegenden Seite der Abdeckzunge 11 des Gurtschlusses 8 anliegt.

Der im Korpus 19 des Gurtschlusses 8 ausgebildete Hohlraum 28 ermöglicht eine Bewegung des Verschlusses 20 aus ferromagnetischem Material in Einfahrrichtung 24. Dank der elastischen Vorspannung durch den über die Stirnseite 21 des Verschlusses 20 gefahrenen Sperrhebels 12, schnellt der Verschluss 20 bei Freigabe der Stirnseite 21 durch Zurückfahren des Hebels 12 nach oben, wobei der Verschluss 20 die Arretieröffnung 3 des Befestigungselementes 2 sowie die Öffnung 15 in der Abdeckzunge 11 des Gurtschlosses 8 durchsetzt. Der Hohlraum 28 ermöglicht die Bewegung des blattfederartigen Federelementes 17, welches in einer Aufnahme 18 im Korpus 19 des Gurtschlosses 8 festgelegt ist.

Durch Einfahren des oberen Bereiches des aus ferromagnetischem Material gefertigten Verschlusselementes 20 wird der Magnetkreis 16, welcher ein magnetfeldempfindliches Sensorelement 31, vorzugsweise in Gestalt eines analogen, voll integrierten Hall-Sensors enthält, geschlossen. Dadurch entsteht eine erste Information "Gurt ist korrekt eingelegt", welche optisch oder akustisch am Bereich der Instrumententafel oder unmittelbar am Fahrzeugsitz angegeben wird. Durch das Vorsehen eines elastischen, verformbaren Messelementes 25 am Gurtschloss 8 kann darüber hinaus eine Änderung der Kraft auf den Sicherheitsgurt 1 erfasst werden. Die Änderung der Kraft im Sicherheitsgurt 1 wird über die Verbindungsstelle 4 an das als Gurtzunge mit einer Arretieröffnung 3 ausgebildete Befestigungselement 2 übertragen. Dieses wiederum überträgt eine Änderung der Zugkraft im Sicherheitsgurt 1 auf das an dem blattfederförmigen Träger 17 befestigte Trägerelement 20 aus ferromagnetischem Material. Eine Auslenkung des Verschlusses 20 proportional zur Änderung der Kraft im Sicherheitsgurt 1 führt eine Verschiebung des federartig beschaffenen Messelementes 25 aus seiner Ursprungsposition herbei. Die kraftproportionale Änderung der Lage des federartig konfigurierten Messelementes 25 kann durch Feldstärkemodulation im magnetfeldempfindlichen Sensor 31 des Magnetkreises 16 detektiert werden. Entsprechend der Lageänderung des Verschlusses 20 und des daran aufgenommenen Messelementes 25 wird ein kraftproportionales Signal generiert, welches als ein Steuergerät zur Auslösung eines Gurtstraffers oder anderer Insassenschutzsystem, z. B. Airbags, dient, übermittelt. Bei Überschreiten eines bestimmten vorgebbaren Wegwertes des Verschlusselementes 20 des Gurtschlosses 8 können Gurtstraffer ausgelöst werden oder im Extremfall Airbag, seien es Frontairbags oder seien es Seitenairbags, ausgelöst werden. Die im Falle eines Unfalles im Gurtschloss 8 auftretende Maximalkraft kann darüber hinaus im zentralen Steuersystem zur Auslösung von Insassenschutzsystemen eines Fahrzeuges gespeichert werden und später zur Rekonstruktion des Unfallherganges herangezogen werden. Ferner können die im Falle eines Unfalles auftretenden maximalen Zugkräfte im Sicherheitsgurt 1 erfasst werden und für die Weiterentwicklung von Systemen zur Erhöhung des passiven Schutzes von Insassen herangezogen werden. Des weiteren kann die Erfassung der Gurtkraft zur Identifizierung der Fahrzeuginsassen herangezogen werden. Individuelle Gurtkraftwerte, die bestimmten Fahrzeuginsassen zugeordnet sind und deren Werte abgespeichert sind, können in einer Zentralelektronik eines Kraftfahrzeuges gespeichert werden und zur Insassenidentifikation oder für Zugangssicherungsmaßnahmen benutzt werden.

In einer zeichnerisch nicht dargestellten Ausführungsvariante kann das Messelement 25 auch an einem anderen Bauteil des Gurtschlosses angebracht werden. Entscheidend ist, dass das federartig konfigurierte Messelement an einem solchen Bauteil des Gurtschlosses 8 aufgenommen ist, welches den Sicherheitsgurt, d. h. dessen Befestigungselement 2 in Gestalt einer Gurtzunge fixiert. Anstelle der in Figur 2 dargestellten Befestigung des Messelementes 25 unmittelbar am Verschlusselement 20, kann das federartig ausgebildete Messelement 25 auch im Bereich der Öffnung 15 in der das Gurtschloss 8 abdeckenden Abdeckzunge 11 aufgenommen sein. Neben der in Figur 2 dargestellten Anordnung der Komponenten des Magnetkreises 16 an der ersten Seite 22 des Verschlusses 20 können die Komponenten des Magnetkreises 16 in einer nicht dargestellten Ausführungsvariante auch der zweiten Seite 23 des Verschlusses 20 zugeordnet sein, welche dem Befestigungselement 2 des Sicherheitsgurtes 2 zuweist.

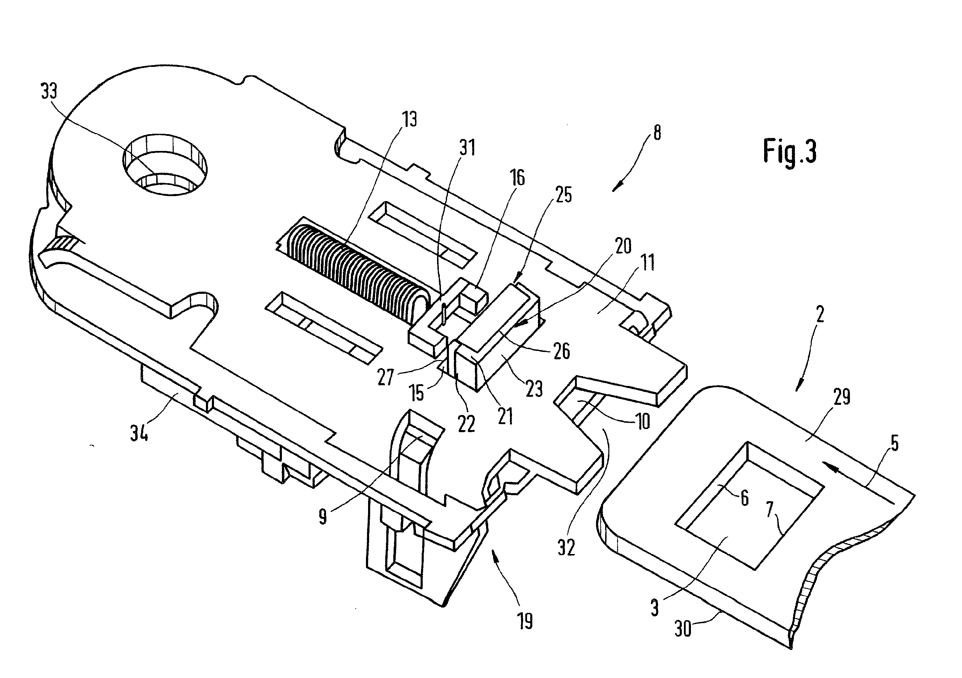

Figur 3 zeigt eine perspektivische Draufsicht auf die Komponenten eines Magnetkreises samt eines Befestigungselementes an einem als Schnappstift ausgebildeten Verschlusselement eines Gurtschlosses.

Das Befestigungselement 2 in Gestalt einer Gurtzunge, welches eine Arretieröffnung 3 enthält, wird in Einführrichtung 5 in die Einführöffnung 10 des Gurtschlosses 8 eingeführt. Die Einführbewegung des Befestigungselementes 2 wird durch zwei einander gegenüberliegende Führungen erleichtert, zu denen die Stirnseiten des Befestigungselementes 2 parallel geführt werden. In der als Befestigungselement 2 dienenden Gurtzunge des Sicherheitsgurtes 1 ist die Arretieröffnung 3 erkennbar, welche eine erste Seite 6 und eine zweite Seite 7 umfasst.

In der perspektivischen Darstellung gemäß Figur 3 ist erkennbar, dass ein als Schnappstift ausgeführtes Verschlusselement 20 des Gurtschlosses 8 eine Öffnung 15 in der Abdeckzunge 11 des Gurtschlosses 8 durchsetzt. In dieser Ausführungsvariante ist das federartig konfigurierte Messelement 25 am Verschlusselement 20 aufgenommen und überdeckt dessen Stirnseite 21 mit einem Stirnabschnitt 26. Parallel zur ersten Seite 22 des Verschlusselementes 20 verläuft ein Seitenabschnitt 27 des federartig konfigurierten Messelementes 25. Dem Seitenabschnitt 27 des federartig ausgebildeten Messelementes 25 gegenüberliegend befindet sich der Magnetkreis 16, in dem der magnetfeldempfindliche Sensor 31, bevorzugt in Gestalt eines Hall-Sensors, angeordnet ist. Über eine Feldstärkemodulation im magnetfeldempfindlichen Sensor 31 kann ein der Zugkraft im Sicherheitsgurt 1 proportionaler Weg des federartigen Messelementes 25 - hier aufgenommen am Verschlusselement 20 - erfasst werden. Der perspektivischen Darstellung eines Gurtschlosses 8 gemäß Figur 3 ist weiterhin entnehmbar, dass das Gurtschloss 8 an einem Widerlager 33 im Fahrzeug befestigt wird. Die Unterseite des Korpus' 19 des Gurtschlosses 8 ist mit Bezugszeichen 34 gekennzeichnet. Die Abdeckzunge 11 im oberen Bereich des Gurtschlosses 8 läuft in einer V-förmigen Spreizung 32 aus und erleichtert die Einführbewegung des Befestigungselementes 2 des Sicherheitsgurtes 1 in die Einführöffnung 10 des Gurtschlosses 8 unterhalb der Abdeckzunge 11.

Mit der erfindungsgemäß vorgeschlagenen Lösung lässt sich mit nur einem Sensor sowohl der Anschnallzustand, d. h. die Position des Befestigungselements 2 im Gurtschloss 8, als auch die im Sicherheitsgurt 1 auftretende Kraft bzw. deren Änderung zuverlässig detektieren. Die vorgeschlagene Lösung stellt ein sehr kostengünstiges Messprinzip dar, welches an fast alle gängigen Gurtschlösser 8, die im Einsatz sind, leicht angepasst werden kann. Es handelt sich um eine kleinbauende, nach einem statischen Messprinzip funktionierende Vorrichtung, die universell durch die Federsteifigkeiten an verschiedene Messbereiche angepasst werden kann. Das abstands- und damit auch kraftproportionale Magnetfeld wird im Magnetkreis 16 mit feldempfindlichem Sensor 31 berührungslos im Luftspalt abgegriffen. Es ist keine hohe Auflösung notwendig, wobei eine gute Nullpunktstabilität aufgrund der erfindungsgemäßen Lösung erreicht werden kann. Eine hohe Gurtkraft führt zu einem kleinen magnetischen Fluß, ein ausgefahrener Verschluß 20 zu einem noch geringeren magnetischen Fluß (B-Feld; magnetische Flußverteilung), weswegen die Anforderungen an das Auflösungsvermögen gering sind. Der magnetfeldempfindliche Sensor 31 mit hier nicht dargestellter, jedoch diesem nachgeordneter Auswerteelektronik lässt sich voll integrieren, wodurch eine einfache Zuleitung und eine sehr kompakte Bauweise möglich wird, so dass Nachrüstungen bei im Betrieb befindlichen Kraftfahrzeugen ohne größeren Montageaufwand leicht möglich sind.

### Bezugszeichenliste

- 1: Sicherheitsgurt
- 2: Gurtzunge
- 3: Arretieröffnung
- 4: Verbindungsstelle
- 5: Einführrichtung
- 6: 1. Seite Arretieröffnung
- 7: 2. Seite Arretieröffnung
- 8: Gurtschloss
- 9: Führung
- 10: Einführöffnung
- 11: Abdeckzunge Gurtschloss
- 12: Sperrhebel
- 13: Rückstellfeder
- 14: Anschlagfläche Sperrhebel
- 15: Öffnung Abdeckzunge
- 16: Magnetkreis
- 17: Federelement
- 18: Aufnahmefederelement
- 19: Korpus Gurtschloss
- 20: Verschlusselement
- 21: Spitze
- 22: 1. Seite
- 23: 2. Seite
- 24: Einfahrbewegung
- 25: Messelement
- 26: Stirnabschnitt
- 27: Seitenabschnitt
- 28: Hohlraum
- 29: Befestigungselement-Oberseite
- 30: Befestigungselement-Unterseite
- 31: Magnetfeldsensor
- 32: Spreizung
- 33: Widerlage Gurtschloss
- 34: Unterseite Gurtschloss-Korpus

## Patentansprüche

1. Gurtschloss zur Aufnahme eines Befestigungselementes (2) eines Sicherheitsgurtes (1) mit einer Einführöffnung (10) für das Befestigungselement (2) und einem im Einrastzustand des Befestigungselementes (2) in eine an diesem vorgesehenen Arretieröffnung (3) einrastenden Verschluss (20), der auf einem blattfederartigen Träger (17) aufgenommen ist, über den eine Einfahrbewegung (24) des Verschlusselements (20) in die Arretieröffnung (3) erfolgt, wenn durch die Einführbewegung des Befestigungselementes (2) ein Sperrhebel (12) betätigt wird, wobei die Einfahrbewegung (24) des Verschlusselements (20) in die Arretieröffnung (3) über einen einen magnetfeldempfindlichen Sensor (31) enthaltenden Magnetkreis (16) überwacht wird, **dadurch gekennzeichnet, dass** einem das Befestigungselement (2) fixierenden Bauteil (11, 20) des Gurtschlosses (8) ein Messelement (25) zugeordnet ist, mit welchem über den Magnetkreis (16, 31) eine auf das Gurtschloss (18) einwirkende Kraft erfassbar ist.

2. Gurtschloss gemäß Anspruch 1, **dadurch gekennzeichnet, dass** das die Arretieröffnung (3) des Befestigungselements (2) durchsetzende Verschlusselement (20) aus einem ferromagnetischen Material gefertigt ist.

3. Gurtschloss gemäß Anspruch 1, **dadurch gekennzeichnet, dass** das Messelement (25) am Verschlusselement (20) befestigt ist.

4. Gurtschloss gemäß Anspruch 3, **dadurch gekennzeichnet, dass** das Messelement (25) einen die Spitze (21) des Verschlusselements (20) übergreifenden Stirnabschnitt (26) sowie einen parallel zu einer 1. Seite (22) des Verschlusselementes (20) verlaufenden Abschnitt (27) aufweist.

5. Gurtschloss gemäß Anspruch 3, **dadurch gekennzeichnet, dass** das am Verschlusselement (20) aufgenommene Messelement (20) verformbar ausgebildet ist.

6. Gurtschloss gemäß Anspruch 3, **dadurch gekennzeichnet, dass** das am Verschlusselement (20) aufgenommene Messelement (25) im in die Arretieröffnung (3) des Befestigungselementes (2) eingefahrenen Zustand durch eine Öffnung (15) einer Abdeckzunge (11) ragt, an der der Magnetkreis (16) aufgenommen ist.

7. Gurtschloss gemäß Anspruch 1, **dadurch gekennzeichnet, dass** das Messelement (25) in einer Öffnung (15) einer Abdeckzunge (11) des Gurtschlosses (8) verformbar aufgenommen ist.

8. Gurtschloss gemäß der Ansprüche 3 und 7, **dadurch gekennzeichnet, dass** das Messelement (25), welches aus ferromagnetischem Material gefertigt ist, derart geformt ist, dass es bei einer Kraftänderung im Sicherheitsgurt (1) aus seiner ursprünglichen Position verschoben wird.

9. Gurtschloss gemäß Anspruch 1, **dadurch gekennzeichnet, dass** der dem Magentkreis 16 zugeordnete magnetfeldempfindliche Sensor (31) ein Hall-Sensor ist.

10. Gurtschloss gemäß Anspruch 1, **dadurch gekennzeichnet, dass** der magnetfeldempflindliche Sensor (31) eine Erfassung des der Kraftänderung im Sicherheitsgurt (1) proportionalen Weges des Verschlusselements (20) über die Modulation der Feldstärke des magnetischen Feldes vornimmt.
